(19)

**Europäisches Patentamt**
**European Patent Office**
**Office européen des brevets**

(11) **EP 4 712 070 A1**

(12) **EUROPEAN PATENT APPLICATION**
published in accordance with Art. 153(4) EPC

(43) Date of publication:
**18.03.2026 Bulletin 2026/12**

(21) Application number: **24802567.8**

(22) Date of filing: **27.02.2024**

(51) International Patent Classification (IPC):
***G10K 11/178*** (2006.01)

(52) Cooperative Patent Classification (CPC):
**Y02T 90/00**

(86) International application number:
**PCT/CN2024/078856**

(87) International publication number:
**WO 2024/230279 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2023 CN 202310526854**

(71) Applicant: **Chongqing Changan Automobile Co., Ltd.**
**Chongqing 400023 (CN)**

(72) Inventors:
• **LIAO, Xiangning**
**Chongqing 400023 (CN)**
• **PANG, Jian**
**Chongqing 400023 (CN)**
• **YANG, Liang**
**Chongqing 400023 (CN)**

(74) Representative: **Barker Brettell LLP**
**100 Hagley Road**
**Edgbaston**
**Birmingham B16 8QQ (GB)**

(54) **NOISE CONTROL SYSTEM AND METHOD HAVING ADJUSTABLE MULTI-REGION NOISE REDUCTION PERFORMANCE, AND COMPUTER DEVICE**

(57) The present application relates to a noise control system and method with adjustable multi-region noise reduction performance, and a computer device, which relates to the field of vehicle noise reduction technologies. In the present application, the adaptation factors of the acoustic error signals for individual regions are adjusted and controlled based on different region noise sound pressure levels and user requirements, and a multi-region noise energy minimization control model with the adaptation factors is constructed. Based on the multi-region noise energy minimization control model with the adaptation factors, the weight coefficient vector of the speaker is updated. By setting the numerical value of the adaptation factor, personalized adjustment of the noise reduction performance in each region can be achieved, so that regions with higher noise sound pressure levels can obtain the optimal noise reduction performance. The present application achieves adjustable multi-region noise reduction performance, and obtains better low-noise experience in different regions.

FIG. 1

**Description**

The present application claims priority to Chinese patent application No. 2023105268542, filed with the China National Intellectual Property Administration on May 9, 2023 and entitled "NOISE CONTROL SYSTEM AND METHOD WITH ADJUSTABLE MULTI-REGION NOISE REDUCTION PERFORMANCE, AND COMPUTER DEVICE", the disclosure of which is hereby incorporated by reference in its entirety.

**TECHNICAL FIELD**

The present application relates to the field of vehicle noise reduction technologies, more particularly, to a noise control system and method with adjustable multi-region noise reduction performance, and a computer device.

**BACKGROUND**

With the rapid development of intelligent cabins, various personalized intelligent sound interaction experiences, such as cabin cinemas, Dolby panoramic sound, independent sound zone interaction, etc., have garnered a lot of attention from consumers and car manufacturers. If we expect personalized intelligent sound interaction to provide a better experience, the low-noise design of the entire vehicle is still one of the key fundamental technologies. Due to the inability of a traditional passive control technology to adaptively adjust to different noises and improve the performance of vehicle-level chips, active noise control technology has developed rapidly.

The existing active noise control algorithms mainly include a least mean square (LMS) algorithm, a filter-x based least mean square (FXLMS) algorithm. However, when applied to multi-region noise reduction, the aforementioned algorithms fail to account for the differences in the original noise energy levels across the regions and the actual user requirements. For example, when there is a roaring phenomenon inside the vehicle, noise sound pressure levels vary at different seats, resulting in different perceptions of roaring. Therefore, only considering the minimization of the total noise energy as the minimum may not achieve the optimal noise reduction performance in regions with higher noise sound pressure levels.

The prior art discloses a method for an active noise control system and a 3D closed system using a co-FXLMS algorithm. An adaptive filter ($W(z)$) that actively adapts to the surrounding environment, a first-order path transfer function ($P(z)$), and an additional path transfer function ($S(z)$) are proposed. Each output device has an output device and an additional path prediction value ($S'(z)$) for inputting the predicted values ($S'(z)$) of the additional path transfer function and a main path transfer function. In an ANC system using the FXLMS algorithm, the system is configured to adjust the coefficient vector of the adaptive filter by feeding back an error signal $e(n)$ obtained through addition and a reference signal of a predicted value of a compensation signal. The cross-correlation between the error signal of the predicted value of the compensation additional path transfer function and the reference signal ($x'(n)$) is extracted in real time, and the coefficient vector of the adaptive filter adjusts the convergence coefficient of the FXLMS algorithm through the extracted cross-correlation, thus enabling real-time adjustments. However, this scheme does not consider the differences in original noise energy in multiple regions and the actual user requirements.

The prior art also discloses a vehicle active noise reduction control system based on FXLMS. A method for delaying the output of primary noise signals is proposed, which makes the superposition time of primary noise signals and sound signals emitted by speakers the same, reduces the delay error between external noise and the sound signals emitted by the speakers, thereby improving the noise reduction effect. However, this scheme does not consider the differences in original noise energy in multiple regions and the actual user requirements.

**SUMMARY**

The objective of the present application is to provide a noise control system and a method with adjustable multi-region noise reduction performance, and a computer device, to solve the problem in the prior art that optimal noise reduction performance may not be achieved in regions with higher noise sound pressure levels when the goal is to minimize the total noise energy across multiple regions.

In a first aspect, the present application provides a noise control system with adjustable multi-region noise reduction performance, which includes:

a reference signal acquisition unit, which collects a reference signal and inputs the reference signal into a noise control unit;

a plurality of error microphone arrays, each of which collects an original noise signal or an acoustic error signal from a to-be-denoised region, and inputs the original noise signal or the acoustic error signal to the noise control unit, where each of the plurality of error microphone arrays collects from a different to-be-denoised region;

a noise control unit, which adjusts and controls adaptation factors of acoustic error signals for individual regions based on original noise sound pressure levels in different regions and a user requirement, and constructs a multi-region noise energy minimization control model with the adaptation factors, after receiving the reference signal, and the original noise signal or the acoustic error signal of each to-be-denoised region, the noise control unit calculates an excitation signal for a speaker array based on the multi-region noise energy minimization control model with the adaptation factors, and transmits the excitation signal to the speaker array;

the speaker array, after the excitation signal for the speaker array is input to the speaker array, the speaker array produces sound and superimposes the sound with noise signals in the plurality of to-be-denoised regions, to form an acoustic error signal for each region in the plurality of to-be-denoised regions, where the acoustic error signals for regions are input to the noise control unit through the plurality of error microphone arrays.

According to the above technical means, the noise control unit adjusts and controls adaptation factors of acoustic error signals for individual regions based on original noise sound pressure levels in different regions and the user requirement. The numerical value of the set adaptation factor reflects to some extent the noise reduction effect that the user hopes to achieve in that region. In the multi-region noise energy minimization control model with the adaptation factors, the adjusted and controlled adaptation factor(s) of the acoustic error signal(s) in each region is used for calculating the updated excitation signal of the speaker array. This ensures that the noise reduction effect in each region more closely matches the user's requirements after the speaker array produces sound. According to the adaptation factors, different degrees of noise reduction effects can be achieved in different regions, and further aiming to minimize the total noise energy across multiple regions, which can achieve the optimal or user required noise reduction performance.

Further, each of the plurality of error microphone arrays includes at least one error microphone.

Further, the speaker array includes at least one speaker.

Further, the noise control unit adjusting and controlling the adaptation factors of acoustic error signals for individual regions based on original noise sound pressure levels in different regions and the user requirement, and constructing the multi-region noise energy minimization control model with the adaptation factors, is specifically as follows:

$$\min \quad \lambda_1 \left\| \mathbf{e}_1(t) \right\|^2 + \lambda_2 \left\| \mathbf{e}_2(t) \right\|^2 + \cdots + \lambda_k \left\| \mathbf{e}_k(t) \right\|^2 + \cdots + \lambda_K \left\| \mathbf{e}_K(t) \right\|^2$$

where $\lambda_k$ is an adaptation factor of an acoustic error signal in a k-th region, $\lambda_k \geq 0$, $\lambda_k$ is adjusted and controlled based on an original noise sound pressure level in the $k$-th region and the user requirement, $e_k(t)=[e_{k1}(t)\, e_{k2}(t) \cdots e_{km}(t) \cdots e_{kM}(t)]$ is an acoustic error signal vector in the $k$-th region at time $t$, $e_{kM}(t)$ is an $m$-th acoustic error signal in the $k$-th region at time $t$, there are M acoustic error signals for each region, where k={ 1,2,..., K}, m={1,2,..., M}.

Further, the $\lambda_k$ is adjusted and controlled based on the original noise sound pressure level in the $k$-th region and the user requirement, is specifically as follows:

when noise reduction is not required in the $k$-th region, setting $\lambda_k = 0$;
when the original noise sound pressure level in the k-th region is lower than an original noise sound pressure level in a further region, setting $0 < \lambda_k < 1$;
when the original noise sound pressure level in the k-th region is equal to the original noise sound pressure level in the further region, setting $\lambda_k = 1$;
when the original noise sound pressure level in the k-th region is higher than the original noise sound pressure level in the further region, setting $\lambda_k > 1$.

According to the above technical means, it is achieved to adjust and control the adaptation factors based on the original noise sound pressure levels in different regions and the user requirements. When the noise reduction is not required in a certain region, $\lambda_k = 0$ is set in this region. When the original noise sound pressure level in a certain region is lower than that in other regions or when this region is not a priority of the noise reduction, $0 < \lambda_k < 1$ is set in this region. When the original noise sound pressure level in a certain region is comparable to that in other regions or the entire noise-reduction region requires balanced noise reduction, $\lambda_k = 1$ is set in this region. When the original noise sound pressure level in a certain region is higher than that in other regions or when this region is a priority of the noise reduction, $\lambda_k > 1$ is set in this region. By setting the numerical value of the adaptation factor, personalized adjustment of the noise reduction performance in each region can be achieved, so that regions with higher noise sound pressure levels can obtain the optimal noise reduction performance.

Further, the after receiving the reference signal, and the original noise signal or the acoustic error signal of each to-be-denoised region, the noise control unit calculating the excitation signal for the speaker array based on the multi-region noise energy minimization control model with the adaptation factors, is specifically as follows:

calculating the excitation signal for the speaker array based on the reference signal and an initialized weight coefficient vector of the speaker array;

after the excitation signal for the speaker array is input to the speaker array, the speaker array producing sound and superimposing the sound with the noise signals in the plurality of to-be-denoised regions, to form the acoustic error signal for each region in the plurality of to-be-denoised regions;

calculating a filtered signal of the reference signal based on a time-domain estimated transfer function vector between the speaker array and the error microphone array in a corresponding region;

updating, based on the filtered signal of the reference signal and the acoustic error signal for each region, a weight coefficient vector of the speaker array according to a principle of multi-region noise energy minimization;

repeating the aforementioned steps until the predetermined number of iterations or the multi-region noise energy minimization is reached, where when the aforementioned steps are repeated, an updated weight coefficient of the speaker array is used to calculate the excitation signal for the speaker array.

Further, the calculating the excitation signal for the speaker array based on the reference signal and the initialized weight coefficient vector of the speaker array, is specifically as follows:

$$y_l(t) = \mathbf{W}_l^{\mathrm{T}}(t)\mathbf{X}(t)$$

where $y_l(t)$ is an excitation signal of an $l$-th speaker at time $t$, $\mathbf{W}_l(t)$ is a weight coefficient vector of the $l$-th speaker at time $t$, T represents transpose of a vector, $\mathbf{W}_l(t) = [w_{l0}(t)\ w_{l1}(t) \cdots w_{ln}(t) \cdots w_{lN-1}(t)]^{\mathrm{T}}$, $w_{ln}(t)$ is an $n$-th weight coefficient of the $l$-th speaker at time $t$, $N$ is an order of the weight coefficient vector of the speaker array, $\mathbf{X}(t) = [x(t)\ x(t-1) ... x(t-n+1) ... x(t-N+1)]^T$ is a reference signal vector, $x(t-n+1)$ is $n$ elements of the reference signal vector, $l=\{1,2,...,L\}$, L is the number of speakers, n=\{1,2,...,N\}.

Further, the calculating the filtered signal of the reference signal based on the time-domain estimated transfer function vector between the speaker array and the error microphone array in the corresponding region, is specifically as follows:

$$\hat{x}_{lkm}(t) = \mathbf{X}(t) * \hat{\mathbf{h}}_{lkm} = \sum_{q=0}^{Q-1} \hat{h}_{lkmq}\, x(t-q)$$

where $\hat{x}_{lkm}(t)$ is the filtered signal of the reference signal at time $t$; $\hat{\mathbf{x}}_{lkm}(t) = [\hat{x}_{lkm}(t)\ \hat{x}_{lkm}(t-1) ... \hat{x}_{lkm}(t-n+1)] ... \hat{x}_{lkm}(t-N+1)]^T$, $\hat{x}_{lkm}(t-n+1)$ is an $n$-th element in the filtered signal of the reference signal at time $t$, * represents a convolution operation, $\hat{\mathbf{h}}_{lkm} = [\hat{h}_{lkm1}\ \hat{h}_{lkm2} \cdots \hat{h}_{lkmq} \cdots \hat{h}_{lkmQ}]^T$ is the time-domain estimated transfer function vector from the $l$-th speaker to an $m$-th error microphone in a $k$-th region, $\hat{h}_{lkmq}$ is a $q$-th element in the time-domain estimated transfer function vector from the $l$-th speaker to the $m$-th error microphone in the $k$-th region, $q = \{0,1,...,Q-1\}$, and Q is an order of the time-domain estimated transfer function vector.

Further, the updating, based on the filtered signal of the reference signal and the acoustic error signal for each region, the weight coefficient vector of the speaker array according to the principle of multi-region noise energy minimization, is specifically as follows:

$$\mathbf{W}_l(t+1) = \mathbf{W}_l(t) - 2\mu\sum_{k=1}^{K}\lambda_k\left(\sum_{m=1}^{M}\hat{\mathbf{x}}_{lkm}(t)e_{km}(t)\right)$$

where $\mathbf{W}_l(t+1)$ is the weight coefficient vector of the speaker array at time $t+1$, and $\mu$ is a preset step factor.

According to the above technical means, the adaptation factors of corresponding regions are first confirmed based on the original noise sound pressure levels in different regions and the user requirements. Based on the multi-region noise energy minimization control model with the adaptation factors, the weight coefficient vector of the speaker array is continuously updated to achieve the effect of multi-region noise energy minimization.

In a second aspect, the present application further provides a noise control method with adjustable multi-region noise reduction performance, which includes the following steps:

collecting, by a reference signal acquisition unit, a reference signal, and acquiring, by an error microphone array, an original noise signal or an acoustic error signal from a corresponding to-be-denoised region;

initializing a weight coefficient vector of the speaker array;

adjusting and controlling adaptation factors of acoustic error signals for individual regions based on original noise sound pressure levels in different regions in a plurality of to-be-denoised regions and a user requirement, and constructing a multi-region noise energy minimization control model with the adaptation factors;

calculating an excitation signal for the speaker array based on the reference signal and the initialized weight coefficient vector of the speaker array;

after the excitation signal is received by the speaker array, producing sound and superimposing, by the speaker array, the sound with the noise signals in the plurality of to-be-denoised regions, to form an acoustic error signal for each region in the plurality of to-be-denoised regions;

calculating a filtered signal of the reference signal based on a time-domain estimated transfer function vector between the speaker array and the error microphone array in a corresponding region;

updating, based on the filtered signal of the reference signal and the acoustic error signal for each region, the weight coefficient vector of the speaker array according to a principle of multi-region noise energy minimization;

repeating the aforementioned steps until a predetermined number of iterations or the multi-region noise energy minimization is reached, where when the aforementioned steps are repeated, an updated weight coefficient of the speaker array is used to calculate the excitation signal for the speaker array.

Further, the adjusting and controlling the adaptation factors of acoustic error signals for individual regions based on the original noise sound pressure levels in different regions in the plurality of to-be-denoised regions and the user requirement, and constructing the multi-region noise energy minimization control model with the adaptation factors, is specifically as follows:

$$\min \quad \lambda_1 \left\| \mathbf{e}_1 \left( t \right) \right\|^2 + \lambda_2 \left\| \mathbf{e}_2 \left( t \right) \right\|^2 + \cdots + \lambda_k \left\| \mathbf{e}_k \left( t \right) \right\|^2 + \cdots + \lambda_K \left\| \mathbf{e}_K \left( t \right) \right\|^2$$

where $\lambda_k$ is an adaptation factor of an acoustic error signal in a k-th region, $\lambda_k \geq 0$, $\lambda_k$ is adjusted and controlled based on an original noise sound pressure level in the $k$-th region and the user requirement, $e_k(t)=[e_{k1}(t)\ e_{k2}(t)\cdots e_{km}(t)\cdots e_{kM}(t)]$ is an acoustic error signal vector in the $k$-th region at time $t$, $e_{kM}(t)$ is an $m$-th acoustic error signal in the k-th region at time $t$, there are $M$ acoustic error signals for each region, where k={1,2,..., K}, m={1,2,..., M}.

Further, the adjustment and control of $\lambda_k$ based on the original noise sound pressure level in the $k$-th region and the user requirement are specifically as follows:

when noise reduction is not required in the $k$-th region, setting $\lambda_k=0$;

when the original noise sound pressure level in the $k$-th region is lower than an original noise sound pressure level in a further region, setting $0<\lambda_k<1$;

when the original noise sound pressure level in the $k$-th region is equal to the original noise sound pressure level in the further region, setting $\lambda_k=1$;

when the original noise sound pressure level in the $k$-th region is higher than the original noise sound pressure level in the further region, setting $\lambda_k>1$.

Further, the calculating the excitation signal for the speaker array based on the reference signal and the initialized weight coefficient vector of the speaker array, is specifically as follows:

$$y_l \left( t \right) = \mathbf{W}_l^{\mathrm{T}} \left( t \right) \mathbf{X} \left( t \right)$$

where $y_l(t)$ is an excitation signal of an $l$-th speaker at time $t$, $W_l(t)$ is a weight coefficient vector of the $l$-th speaker at time $t$, T represents transpose of a vector, $\mathbf{W}_l(t)=[w_{l0}(t)\ w_{l1}(t)\cdots w_{ln}(t)\cdots w_{lN-1}(t)]^{\mathrm{T}}$, $w_{ln}(t)$ is an $n$-th weight coefficient of the $l$-th speaker at time $t$, N is an order of the weight coefficient vector of the speaker array, $\mathbf{X}(t)=[x(t)\ x(t-1)\ ...\ x(t-n+1)\ ...\ x(t-N+1)]^T$ is a reference signal vector, $x(t-n+1)$ is $n$ elements of the reference signal vector, l={1,2,..., L}, L is the number of speakers, n={1,2,...,N},

Further, the calculating the filtered signal of the reference signal based on the time-domain estimated transfer function vector between the speaker array and the error microphone array in the corresponding region, is specifically as follows:

$$\hat{x}_{lkm} \left( t \right) = \mathbf{X} \left( t \right) * \hat{\mathbf{h}}_{lkm} = \sum_{q=0}^{Q-1} \hat{h}_{lkmq}\ x \left( t - q \right)$$

where $\hat{x}_{lkm}(t)$ is the filtered signal of the reference signal at time $t$; $\hat{x}_{lkm}(t) = [\hat{x}_{lkm}(t)\ \hat{x}_{lkm}(t-1)\cdots \hat{x}_{lkm}(t-n+1)]\cdots \hat{x}_{lkm}(t-N+1)^T$,

$\hat{x}_{lkm}(t-n+1)$ is an $n$-th element in the filtered signal of the reference signal at time $t$, * represents a convolution operation, $\hat{h}_{lkm} = [\hat{h}_{lkm1} \ \hat{h}_{lkm2} \cdots \hat{h}_{lkmq} \cdots \hat{h}_{lkmQ}]^T$ is the time-domain estimated transfer function vector from the $l$-th speaker to an $m$-th A error microphone in a $k$-th region, $\hat{h}_{lkmq}$ is a $q$-th element in the time-domain estimated transfer function vector from the $l$-th speaker to the $m$-th error microphone in the $k$-th region, $q = \{0,1,...,Q-1\}$, and $Q$ is an order of the time-domain estimated transfer function vector.

Further, the updating, based on the filtered signal of the reference signal and the acoustic error signal for each region, the weight coefficient vector of the speaker array according to the principle of multi-region noise energy minimization, is specifically as follows:

$$\mathbf{W}_l(t+1) = \mathbf{W}_l(t) - 2\mu \sum_{k=1}^{K} \lambda_k \left( \sum_{m=1}^{M} \hat{\mathbf{x}}_{lkm}(t) e_{km}(t) \right)$$

where $\mathbf{W}_l(t+1)$ is the weight coefficient vector of the speaker array at time $t+1$, and $\mu$ is a preset step factor.

In a third aspect, the present application further provides a computer device, which includes a memory, a processor, and a computer program stored on the memory and executable on the processor. The processor implements the noise control method with adjustable multi-region noise reduction performance when executing the computer program.

In a fourth aspect, the present application further provides a computer-readable storage medium, where a computer program is stored in the computer-readable storage medium, and when the computer program is run on a computer, the computer executes the noise control method with adjustable multi-region noise reduction performance.

In a fifth aspect, the present application further provides a computer program product, which includes a computer program. When a computer runs the computer program, the computer program executes the noise control method with adjustable multi-region noise reduction performance.

The present application provides a noise control system and method with adjustable multi-region noise reduction performance, and a computer device. According to the noise control system of the present application, a hardware structure of the noise control system with adjustable multi-region noise reduction performance is composed of a reference signal acquisition unit, a plurality of error microphone arrays, a noise control unit, and a speaker array. The adaptation factors of the acoustic error signals for individual regions are adjusted and controlled based on different region noise sound pressure levels and a user requirement, and a multi-region noise energy minimization control model with the adaptation factors is constructed. Based on the multi-region noise energy minimization control model with the adaptation factors, the weight coefficient vector of the speaker array is updated, thus achieving adjustable multi-region noise reduction performance, and obtaining better low-noise experience in different regions. The noise control method of the present application aims to achieve noise reduction in multiple regions. Firstly, the excitation signal for the speaker array is calculated. Once the excitation signal is input to the speaker array, the sound produced by the speaker is superimposed with the original noise in the region, creating the acoustic error signal for each region. Then, based on the principle of multi-region noise energy minimization, the weight coefficient vector of the speaker array is updated, this so that when the excitation signal for the speaker array which is calculated using the updated and iterated weight coefficient vector of the speaker array excites the speaker array to produce sound, it can minimize the multi-region noise energy and achieve multi-region noise reduction.

## BRIEF DESCRIPTION OF DRAWINGS

FIG. 1 is a schematic diagram of a noise control system with adjustable multi-region noise reduction performance provided by an embodiment of the present application.

FIG. 2 is another schematic diagram of a noise control system with adjustable multi-region noise reduction performance provided by an embodiment of the present application.

FIG. 3 is a schematic flowchart of a noise control method with adjustable multi-region noise reduction performance provided by an embodiment of the present application.

FIG. 4 is a schematic principle of a noise control method with adjustable multi-region noise reduction performance provided by an embodiment of the present application.

FIG. 5 is a schematic diagram of original noise sound pressure levels at the right ear of the driver's seat, the right ear of the passenger's seat, the right ear of the rear right seat, and the right ear of the rear left seat during an idle condition of a certain fuel vehicle provided by an embodiment of the present application.

FIG. 6 is a schematic diagram of a computer device provided by an embodiment of the present application.

## DESCRIPTION OF EMBODIMENTS

The embodiments of the present application will be illustrated below with reference to the accompanying drawings and preferred embodiments. The person skilled in the art can easily understand other advantages and effects of the present application from the content disclosed in the present specification. The present application can also be implemented or applied through different specific implementation methods, and various details in the specification can be modified or changed based on different perspectives and applications without departing from the spirit of the present application. It should be understood that the preferred embodiments are only intended to illustrate the present application and not to limit the protection scope of the present application.

It should be noted that the illustrations provided in the following embodiments only illustrate the basic concept of the present application in a schematic manner. Therefore, the illustrations only show the components related to the present application and are not drawn according to the number, shape, and size of the components in actual implementation. The form, quantity, and proportion of each component in actual implementation can be arbitrarily changed, and the layout of the components may also be more complex.

Below is a specific explanation.

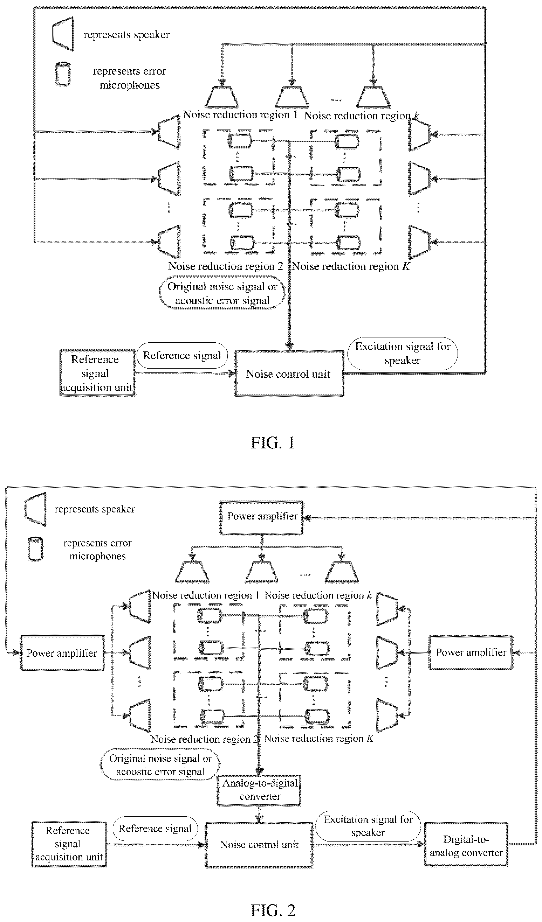

As shown in FIG. 1, an embodiment of the present application provides a noise control system with adjustable multi-region noise reduction performance. The system includes:

a reference signal acquisition unit, which collects a reference signal and inputs the reference signal into a noise control unit;

a plurality of error microphone arrays, each of which collects an original noise signal or an acoustic error signal from a to-be-denoised region, and inputs the original noise signal or the acoustic error signal to the noise control unit, where each of the plurality of error microphone arrays collects from a different to-be-denoised region;

a noise control unit, which adjusts and controls adaptation factors of acoustic error signals for individual regions based on original noise sound pressure levels in different regions and a user requirement, and constructs a multi-region noise energy minimization control model with the adaptation factors, after receiving the reference signal, and the original noise signal or the acoustic error signal of each to-be-denoised region, the noise control unit calculates an excitation signal for a speaker array based on the multi-region noise energy minimization control model with the adaptation factors, and transmits the excitation signal to the speaker array;

a speaker array, after receiving the excitation signal, the speaker array produces sound and superimposes the sound with noise signals in the plurality of to-be-denoised regions, to form an acoustic error signal for each region in the plurality of to-be-denoised regions, where the acoustic error signals for regions are input to the noise control unit through the plurality of error microphone arrays.

As shown in FIG. 1, the reference signal acquisition unit acquires reference signals. In different noise active control systems, the reference signals are different. For example, in an engine noise active control system, the reference signals mainly include a speed signal, a transmitter vibration signal, etc. In a road traffic noise active control system, the reference signals mainly include vibration signals from a suspension, a steering knuckle, and other positions. The error microphone arrays collect noise signals or acoustic error signals from different regions. As shown in FIG. 1, if the noise signal or the acoustic error signal collected by the error microphone is directly a digital signal, the digital signal can be directly input to the noise control unit, it is unnecessary to connect the error microphone array to an analog-to-digital converter in this case. As shown in FIG. 2, if the noise signal or the acoustic error signal collected by the error microphone array is not a digital signal, it is input to the noise control unit through the analog-to-digital converter. As shown in FIG. 1, after receiving the reference signal, and noise signals or acoustic error signals from different regions, the noise control unit calculates the excitation signal for the speaker array (i.e., a speaker excitation signal shown in FIG. 1). The excitation signal for the speaker array is transmitted to the speaker array to make it produce sound. The sound signal emitted by the speaker array is superimposed with the original noise signal in the region that requires noise reduction to achieve noise reduction. In another implementation, as shown in FIG. 2, the excitation signal for the speaker array (i.e. the speaker excitation signal shown in FIG. 2) is transmitted to the speaker array after passing a digital-to-analog converter and a power amplifier, causing the speaker array to produce sound. Among them, the arrangement positions of the error microphone array and the speaker array can be changed according to the number of target regions and the target region that requires noise reduction.

From a perspective of considering the original noise sound pressure levels in different regions and the user requirement, in the embodiments of the present application, an adaptation factor is set for each to-be-denoised region, and a multi-region noise energy minimization control model with the adaptation factors is constructed. Then, the multi-region noise energy minimization control model with the adaptation factors is used to update the weight coefficient of the speaker array, so that optimal noise reduction performance in different regions can be achieved.

Each of the plurality of error microphone arrays includes at least one error microphone.

The speaker array includes at least one speaker.

The noise control unit adjusting and controlling the adaptation factors of acoustic error signals for individual regions based on original noise sound pressure levels in different regions and the user requirement, and constructing the multi-region noise energy minimization control model with the adaptation factors, is specifically as follows:

$$\min \ \lambda_1 \left\| \mathbf{e}_1\left(t\right) \right\|^2 + \lambda_2 \left\| \mathbf{e}_2\left(t\right) \right\|^2 + \cdots + \lambda_k \left\| \mathbf{e}_k\left(t\right) \right\|^2 + \cdots + \lambda_K \left\| \mathbf{e}_K\left(t\right) \right\|^2$$

where $\lambda_k$ is an adaptation factor of an acoustic error signal in a k-th region, $\lambda_k \geq 0$, $\lambda_k$ is adjusted and controlled based on an original noise sound pressure level in the *k*-th region and the user requirement, $e_k(t) = [e_{k1}(t)\ e_{k2}(t) \cdots e_{km}(t) \cdots e_{kM}(t)]$ is an acoustic error signal vector in the *k*-th region at time *t*, $e_{kM}(t)$ is an m-th acoustic error signal in the *k*-th region at time *t*, there are *M* acoustic error signals for each region, where k={ 1,2,..., K}, m={1,2,..., M}.

The adjustment and control of $\lambda_k$ based on the original noise sound pressure level in the k-th region and the user requirement, is specifically as follows:

when noise reduction is not required in the *k*-th region, setting $\lambda_k=0$;
when the original noise sound pressure level in the *k*-th region is lower than an original noise sound pressure level in a further region, setting $0<\lambda_k< 1$;
when the original noise sound pressure level in the k-th region is equal to the original noise sound pressure level in the further region, setting $\lambda_k=1$;
when the original noise sound pressure level in the k-th region is higher than the original noise sound pressure level in the further region, setting $\lambda_k>1$.

The after receiving the reference signal, and the original noise signal or the acoustic error signal of each to-be-denoised region, the noise control unit calculating the excitation signal for the speaker array based on the multi-region noise energy minimization control model with the adaptation factors, is specifically as follows:

calculating the excitation signal for the speaker array based on the reference signal and an initialized weight coefficient vector of the speaker array;
after the excitation signal for the speaker array is input to the speaker array, the speaker array producing sound and superimposing the sound with the noise signals in the plurality of to-be-denoised regions, to form the acoustic error signals for each region in the plurality of to-be-denoised regions;
calculating a filtered signal of the reference signal based on a time-domain estimated transfer function vector between the speaker array and the error microphone array in a corresponding region;
updating, based on the filtered signal of the reference signal and the acoustic error signal for each region, a weight coefficient vector of the speaker array according to a principle of multi-region noise energy minimization;
repeating the aforementioned steps until the predetermined number of iterations or the multi-region noise energy minimization is reached, when repeating the aforementioned steps, an updated weight coefficient of the speaker array is used to calculate the excitation signal for the speaker array.

The calculating the excitation signal for the speaker array based on the reference signal and the initialized weight coefficient vector of the speaker array, is specifically as follows:

$$y_l\left(t\right) = \mathbf{W}_l^{\mathrm{T}}\left(t\right)\mathbf{X}\left(t\right)$$

where $y_l(t)$ is an excitation signal of an *l*-th speaker at time *t*, $W_l(t)$ is a weight coefficient vector of the *l*-th speaker at time *t*, T represents transpose of a vector, $W_l(t)=[w_{l0}(t)\ w_{l1}(t) \cdots w_{ln}(t) \cdots w_{lN-1}(t)]^{\mathrm{T}}$, $w_{ln}(t)$ is an *n*-th weight coefficient of the *l*-th speaker at time *t*, *N* is an order of the weight coefficient vector of the speaker array, $\mathbf{X}(t) = [x(t)\ x(t-1)\ ...\ x(t-n+1)\ ...\ x(t-N+1)]^T$ is a reference signal vector, $x(t-n+1)$ is *n* elements of the reference signal vector, 1={ 1,2,..., L}, L is the number of speakers, n={1,2,...,N},

The calculating the filtered signal of the reference signal based on the time-domain estimated transfer function vector between the speaker array and the error microphone array in the corresponding region, is specifically as follows:

$$\hat{x}_{lkm}\left(t\right) = \mathbf{X}\left(t\right) * \hat{\mathbf{h}}_{lkm} = \sum_{q=0}^{Q-1} \hat{h}_{lkmq}\ x\left(t-q\right)$$

where $\hat{x}_{lkm}(t)$ is the filtered signal of the reference signal at time $t$; $\hat{x}_{lkm}(t) = [\hat{x}_{lkm}(t) \ \hat{x}_{lkm}(t-1) \ ... \ \hat{x}_{lkm}(t-n+1)] \ ... \ \hat{x}_{lkm}(t-N+1)]^T$, $\hat{x}_{lkm}(t-n+1)$ is an $n$-th element in the filtered signal of the reference signal at time $t$, $*$ represents a convolution operation, $\hat{h}_{lkm} = [\hat{h}_{lkm1} \ \hat{h}_{lkm2} \cdots \hat{h}_{lkmq} \cdots \hat{h}_{lkmQ}]^T$ is the time-domain estimated transfer function vector from the $l$-th speaker to an $m$-th error microphone in a $k$-th region, $\hat{h}_{lkmq}$ is a $q$-th element in the time-domain estimated transfer function vector from the $l$-th speaker to the $m$-th error microphone in the k-th region, $q = \{0,1,...,Q-1\}$, and $Q$ is an order of the time-domain estimated transfer function vector.

The updating, based on the filtered signal of the reference signal and the acoustic error signal for each region, the weight coefficient vector of the speaker array according to the principle of multi-region noise energy minimization, is specifically as follows:

$$\mathbf{W}_l(t+1) = \mathbf{W}_l(t) - 2\mu \sum_{k=1}^{K} \lambda_k \left( \sum_{m=1}^{M} \hat{\mathbf{x}}_{lkm}(t) e_{km}(t) \right)$$

where $\mathbf{W}_l(t+1)$ is a weight coefficient vector of the speaker array at time $t+1$, and $\mu$ is a preset step factor.

In a specific implementation of the present embodiment, the reference signal acquisition unit is a controller area network (Controller Area Network, CAN) bus, and the collected reference signal is the engine speed signal. There are four regions in the car that require noise reduction, which are a driver's seat, a passenger's seat, a rear right seat passenger region and a rear left seat passenger region. There is one error microphone in each region. The error microphones are respectively arranged at the right ear of the driver's seat, the right ear of the passenger's seat, the right ear of the rear right seat passenger, and the right ear of the rear left seat passenger. There are 4 speakers, using 4 door speakers.

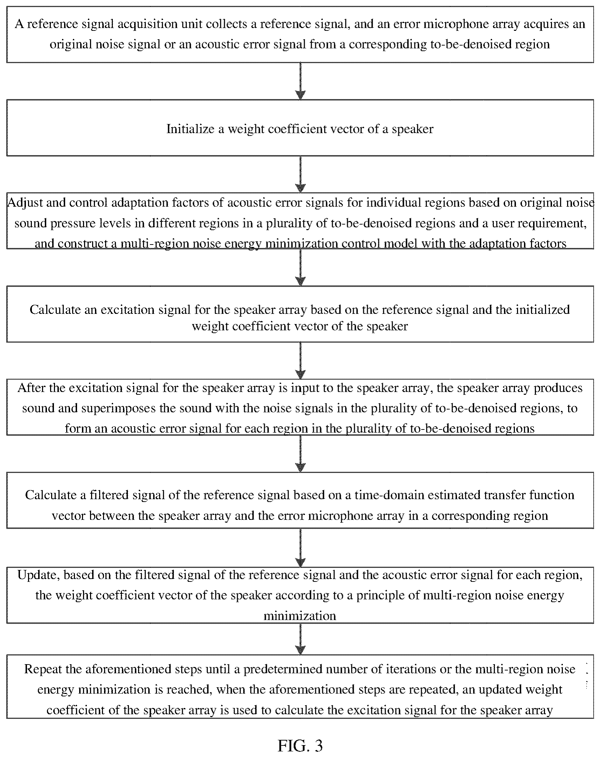

FIG. 3 is a schematic flowchart of a noise control method (w-FXLMS) with adjustable multi-region noise reduction performance provided by an embodiment of the present application. Referring to FIG. 3, the control method includes:

a reference signal acquisition unit collects a reference signal, and an error microphone array acquires an original noise signal or an acoustic error signal from a corresponding to-be-denoised region;

initializing a weight coefficient vector of a speaker array;

adjusting and controlling adaptation factors of acoustic error signals for individual regions based on original noise sound pressure levels in different regions in a plurality of to-be-denoised regions and a user requirement, and constructing a multi-region noise energy minimization control model with the adaptation factors;

calculating an excitation signal for the speaker array based on the reference signal and the initialized weight coefficient vector of the speaker array;

after the excitation signal for the speaker array is input to the speaker array, the speaker array produces sound and superimposes the sound with the noise signals in the plurality of to-be-denoised regions, to form an acoustic error signal for each region in the plurality of to-be-denoised regions;

calculating a filtered signal of the reference signal based on a time-domain estimated transfer function vector between the speaker array and the error microphone array in a corresponding region;

updating, based on the filtered signal of the reference signal and the acoustic error signal for each region, the weight coefficient vector of the speaker array according to a principle of multi-region noise energy minimization;

repeating the aforementioned steps until the predetermined number of iterations or the multi-region noise energy minimization is reached, when repeating the aforementioned steps, using an updated weight coefficient of the speaker array to calculate the excitation signal for the speaker array.

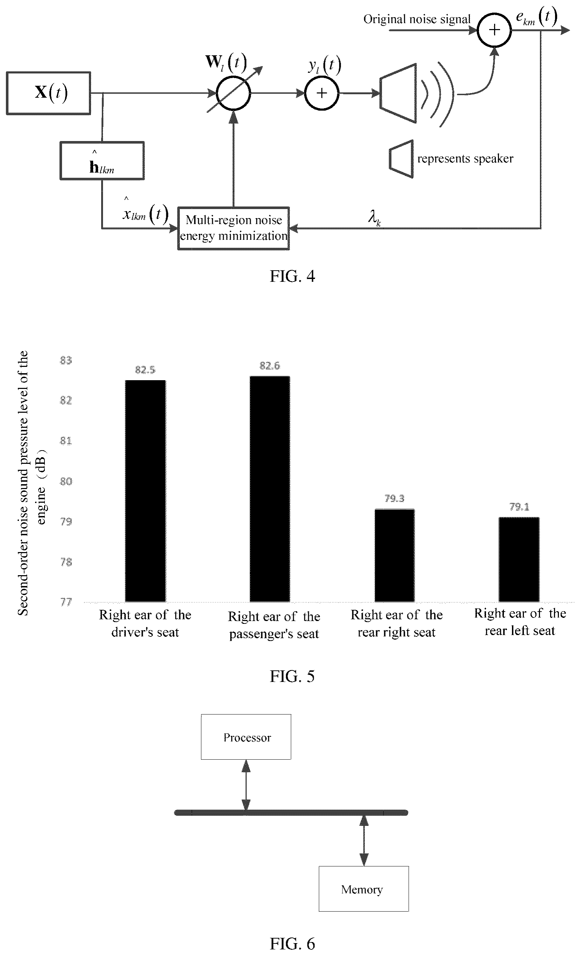

FIG. 4 is a schematic principle of a noise control method with adjustable multi-region noise reduction performance provided by an embodiment of the present application. Referring to FIG. 4, in the embodiments of the present application, first, the excitation signal $y_l(t)$ of the speaker array is calculated based on the reference signal $\mathbf{X}(t)$ and the initialized weight coefficient vector $\mathbf{W}_l(t)$ of the speaker array, then the speaker array is controlled, based on the excitation signal $y_l(t)$ of the speaker array, to produce sound, and the sound is superimposed with the original noise in the to-be-denoised region to form an acoustic error signal $e_{km}(t)$, and then the filtered signal $x_{lkm}(t)$ of the reference signal $\mathbf{X}(t)$ is calculated based on the time-domain estimated transfer function vector $\mathbf{h}_{lkm}$ between the speaker array and the error microphone array in the corresponding region. Using the filtered signal $\hat{x}_{lkm}(t)$ and a predetermined adaptation factor $\lambda_k$, based on the principle of multi-region noise energy minimization, the weight coefficient vector $\mathbf{W}_l(t)$ of the speaker array is updated until the multi-region noise energy is minimized, thus achieving the optimal multi-region noise reduction performance.

In a specific implementation of the present embodiment, the reference signal acquisition unit is a controller area network (Controller Area Network, CAN) bus, and the collected reference signal is the engine speed signal. There are four regions in the car that require noise reduction, which are a driver's seat, a passenger's seat, a rear right seat passenger region and a rear left seat passenger region. There is one error microphone in each region. The error microphones are respectively arranged at the right ear of the driver's seat, the right ear of the passenger's seat, the right ear of the rear right seat passenger, and the right ear of the rear left seat passenger. There are 4 speakers, using 4 door speakers. In the specific example, a noise control method with adjustable multi-region noise reduction performance is used to realize the noise reduction on a second-order noise of the engine. In the following, a further explanation of the control method is provided.

The adjusting and controlling the adaptation factors of acoustic error signals for individual regions based on the original noise sound pressure levels in different regions in the plurality of to-be-denoised regions and the user requirement, and constructing the multi-region noise energy minimization control model with the adaptation factors, is specifically as follows:

$$\min \ \lambda_1 \left\| \mathbf{e}_1\left(t\right) \right\|^2 + \lambda_2 \left\| \mathbf{e}_2\left(t\right) \right\|^2 + \cdots + \lambda_k \left\| \mathbf{e}_k\left(t\right) \right\|^2 + \cdots + \lambda_K \left\| \mathbf{e}_K\left(t\right) \right\|^2$$

where $\lambda_k$ is an adaptation factor of an acoustic error signal in a $k$-th region, $\lambda_k \geq 0$, $\lambda_k$ is adjusted and controlled based on an original noise sound pressure level in the $k$-th region and the user requirement, $\mathbf{e}_k(t)=[e_{k1}(t) \ e_{k2}(t) \cdots e_{km}(t) \cdots e_{kM}(t)]$ is an acoustic error signal vector in the $k$-th region at time $t$, $e_{km}(t)$ is an $m$-th acoustic error signal in the $k$-th region at time $t$, there are $M$ acoustic error signals for each region, where k={1,2,..., K}, m={1,2,..., M}.

In a specific implementation, M=1 and K=4, the multi-region noise energy minimization control model with the adaptation factors is as follows:

$$\min \ \lambda_1 \left\| e_1\left(t\right) \right\|^2 + \lambda_2 \left\| e_2\left(t\right) \right\|^2 + \lambda_3 \left\| e_3\left(t\right) \right\|^2 + \lambda_4 \left\| e_4\left(t\right) \right\|^2$$

where $\lambda_1, \lambda_2, \lambda_3, \lambda_4$ are adaptation factors of the acoustic error signals for the driver's seat, the passenger's seat, the rear right seat passenger region and the rear left seat passenger region inside the vehicle.

As shown in Table 1, the adjustment and control of $\lambda_k$ based on the original noise sound pressure level in the $k$-th region and the user requirement are specifically as follows:

when noise reduction is not required in the $k$-th region, setting $\lambda_k$=0;
when the original noise sound pressure level in the $k$-th region is lower than an original noise sound pressure level in a further region, setting $0<\lambda_k< 1$;
when the original noise sound pressure level in the $k$-th region is equal to the original noise sound pressure level in the further region, setting $\lambda_k$=1;
when the original noise sound pressure level in the $k$-th region is higher than the original noise sound pressure level in the further region, setting $\lambda_k$>1.

**Table 1: strategies for adjusting and controlling adaptation factors in algorithms**

|  | $\lambda_k$ |
|---|---|
| The $k$-th region is a non noise-reduction region | $\lambda_k = 0$ |
| The original noise sound pressure level in the $k$-th region is lower than that in other region(s), and the $k$-th region is a non key noise-reduction region | $0 < \lambda_k < 1$ |
| The original noise sound pressure level in the $k$-th region is equivalent to that in other region(s), and the $k$-th region is a balanced noise-reduction region | $\lambda_k = 1$ |
| The original noise sound pressure level in the $k$-th region is higher than that in other region(s), and the $k$-th region is a key noise-reduction region | $\lambda_k > 1$ |

The process of setting the adaptation factors for acoustic error signals in different regions in the specific example is as follows. The original noise sound pressure level of a fuel vehicle under the idle condition is collected as shown in FIG. 5. From FIG. 5, it can be obtained that the original noise sound pressure level at the right ear of the driver's seat is 82.5dB, and the original noise sound pressure level at the right ear of the rear left seat is 79.1dB, which is 3.4dB; the original noise sound pressure level at the right ear of the passenger's seat is 82.6dB, and the original noise sound pressure level at the right ear of the rear left seat is 79.3dB, which is 3.3dB. Therefore, the front driver-passenger region (the driver's seat and the passenger's seat) is set as a key noise-reduction region, $\lambda_1 = \lambda_2 = 2$, $\lambda_3 = \lambda_4 =1$.

The calculating the excitation signal for the speaker array based on the reference signal and the initialized weight coefficient vector of the speaker array, is specifically as follows:

$$y_l\left(t\right) = \mathbf{W}_l^{\mathrm{T}}\left(t\right)\mathbf{X}\left(t\right)$$

where $y_l(t)$ is an excitation signal of an $l$-th speaker at time $t$, $\mathbf{W}_l(t)$ is a weight coefficient vector of the $l$-th speaker at time $t$, T represents transpose of a vector, $\mathbf{W}_l(t) = [w_{l0}(t)\ w_{l1}(t) \cdots w_{ln}(t) \cdots w_{lN-1}(t)]^{\mathrm{T}}$, $w_{ln}(t)$ is an $n$-th weight coefficient of the $l$-th speaker at time $t$, $N$ is an order of the weight coefficient vector of the speaker array, $\mathbf{X}(t) = [x(t)\ x(t-1) \ldots x(t-n+1) \ldots x(t-N+1)]^T$ is a reference signal vector, $x(t-n+1)$ is $n$ elements of the reference signal vector, $1=\{1,2,\ldots, L\}$, L is the number of speakers, n=$\{1,2,\ldots,N\}$.

In a specific implementation, when using the above formula to calculate the excitation signal for the speaker array, the initial weight coefficient of the speaker array at $t$=0 is set, $\mathbf{W}_l(0) = [0\ 0 \cdots 0]^{\mathrm{T}}$, where N=128, L=4.

The calculating the filtered signal of the reference signal based on the time-domain estimated transfer function vector between the speaker array and the error microphone array in the corresponding region, is specifically as follows:

$$\hat{x}_{lkm}\left(t\right) = \mathbf{X}\left(t\right) * \hat{\mathbf{h}}_{lkm} = \sum_{q=0}^{Q-1} \hat{h}_{lkmq}\, x\left(t-q\right)$$

where $\hat{x}_{lkm}(t)$ is the filtered signal of the reference signal at time $t$; $\hat{x}_{lkm}(t) = [\hat{x}_{lkm}(t)\ \hat{x}_{lkm}(t-1) \ldots \hat{x}_{lkm}(t-n+1)] \ldots \hat{x}_{lkm}(t-N+1)^T$, $\hat{x}_{lkm}(t-n+1)$ is an $n$-th element in the filtered signal of the reference signal at time $t$, * represents a convolution operation, $\hat{h}_{lkm} = [\hat{h}_{lkm1}\ \hat{h}_{lkm2} \cdots \hat{h}_{lkmq} \cdots \hat{h}_{lkmQ}]^T$ is the time-domain estimated transfer function vector from the $l$-th speaker to an $m$-th A error microphone in a $k$-th region, $\hat{h}_{lkmq}$ is a $q$-th element in the time-domain estimated transfer function vector from the $l$-th speaker to the $m$-th error microphone in the $k$-th region, $q = \{0,1,\ldots,Q-1\}$, and Q is an order of the time-domain estimated transfer function vector.

In the specific implementation, Q=128.

The updating, based on the filtered signal of the reference signal and the acoustic error signal for each region, the weight coefficient vector of the speaker array according to the principle of multi-region noise energy minimization, is specifically as follows:

$$\mathbf{W}_l\left(t+1\right) = \mathbf{W}_l\left(t\right) - 2\mu \sum_{k=1}^{K} \lambda_k \left( \sum_{m=1}^{M} \hat{\mathbf{x}}_{lkm}\left(t\right) e_{km}\left(t\right) \right)$$

where $\mathbf{W}_l(t+1)$ is the weight coefficient vector of the speaker array at time $t+1$, and $\mu$ is a preset step factor.

In a specific implementation, $\mu$ =0.02.

To test the noise performance of a noise control method with adjustable multi-region noise reduction performance, this method is compared with a filter-x based minimum mean square algorithm in the prior art. After implementing noise reduction using these two control methods, the second-order sound pressure level of the engine is shown in Table 2. According to Table 2, under the idle condition, both the noise control method (w-FXLMS) with adjustable multi-region noise reduction performance in the embodiment of the present application and the filter-x based minimum mean square algorithm (FXLMS) can achieve second-order noise reduction of the engine. In the front driver-passenger region, the average noise reduction in each region is 26.5dB by using the filter-x based minimum mean square algorithm, while the average noise reduction in each region is about 30.9dB by using the noise control method with adjustable multi-region noise reduction performance in the embodiment of the present application. In the rear passenger region, the average noise reduction in each region is about 18.29dB by using the filter-x based minimum mean square algorithm or the noise control method with adjustable multi-region noise reduction performance in the embodiment of the present application.

In summary, compared to, the optimization strategy of multi-region total noise energy minimization used in the filter-x based minimum mean square algorithm, the noise control method with adjustable multi-region noise reduction performance in the embodiment of the present application constructs a multi-region noise energy minimization control model with the adaptation factors. This achieves adjustable multi-region noise reduction performance and obtains better noise reduction performance in regions with larger original noise energy.

**Table 2: comparison of second-order sound pressure levels of the engine under the control of different noise reduction methods for the fuel vehicle**

| Second-order noise sound pressure level of the engine (dB) | Right ear of the driver's seat | Right ear of the passenger's seat | Right ear of the rear right seat | Right ear of the rear left seat |
|---|---|---|---|---|
| Original noise | 82.5 | 82.6 | 79.3 | 79.1 |

| Second-order noise sound pressure level of the engine (dB) | Right ear of the driver's seat | Right ear of the passenger's seat | Right ear of the rear right seat | Right ear of the rear left seat |
|---|---|---|---|---|
| FXLMS | 60.2 | 51.9 | 58.9 | 63.2 |
| Noise control method (w-FXLMS) with adjustable multi-region noise reduction performance | 56.2 | 47.2 | 58.9 | 63.2 |

(continued)

FIG. 6 is a schematic diagram of a computer device provided by an embodiment of the present application. The computer device includes: a memory, a processor, and a computer program stored on the memory and executable on the processor. The processor implements the noise control method with adjustable multi-region noise reduction performance when executing the computer program.

An embodiment of the present application also provides a computer-readable storage medium. When a computer program in the storage medium is executed by a processor of a computer device, the computer device can execute the aforementioned noise control method with adjustable multi-region noise reduction performance.

An embodiment of the present application also provides a computer program product. The computer program product includes: a computer program stored in a computer-readable storage medium. At least one processor of a computer device can read the computer program from the computer-readable storage medium, and the at least one processor executes the computer program to enable the computer device to perform the aforementioned noise control method with adjustable multi-region noise reduction performance.

The same or similar reference numbers correspond to the same or similar components.

The language used to describe the positional relationship in the accompanying drawings is for illustrative purposes only and should not be understood as a limitation on this patent.

Obviously, the above embodiments of the present application are only for the purpose of clearly illustrating the examples provided in the present application, and are not intended to limit the embodiments of the present application. For ordinary technical personnel in the art, other forms of changes or modifications can be made based on the above explanation. It is not necessary and impossible to exhaustively list all implementations here. Any modifications, equivalent substitutions, and improvements made within the spirit and principles of the present application shall be included within the protection scope of the claims of the present application.

**Claims**

1.  A noise control system with adjustable multi-region noise reduction performance, comprising:

    a reference signal acquisition unit, the reference signal acquisition unit collecting a reference signal and inputting the reference signal into a noise control unit;
    a plurality of error microphone arrays, each of the plurality of error microphone arrays collecting an original noise signal or an acoustic error signal from a to-be-denoised region, and inputting the original noise signal or the acoustic error signal to the noise control unit, wherein each of the plurality of error microphone arrays collects from a different to-be-denoised region;
    a noise control unit, the noise control unit adjusting and controlling adaptation factors of acoustic error signals for individual regions based on original noise sound pressure levels in different regions and a user requirement, and constructing a multi-region noise energy minimization control model with the adaptation factors; after receiving the reference signal, and the original noise signal or the acoustic error signal of each to-be-denoised region, the noise control unit calculating an excitation signal for a speaker array based on the multi-region noise energy minimization control model with the adaptation factors, and transmitting the excitation signal to the speaker array;
    the speaker array, after receiving the excitation signal, the speaker array producing sound and superimposing the sound with noise signals in the plurality of to-be-denoised regions, to form an acoustic error signal for each region in the plurality of to-be-denoised regions, wherein the acoustic error signals for regions are input to the noise control unit through the plurality of error microphone arrays.

2.  The noise control system with adjustable multi-region noise reduction performance according to claim 1, wherein each of the plurality of error microphone arrays comprises at least one error microphone.

3.  The noise control system with adjustable multi-region noise reduction performance according to claim 1 or 2, wherein the speaker array comprises at least one speaker.

4. The noise control system with adjustable multi-region noise reduction performance according to any one of claims 1 to 3, wherein the noise control unit adjusting and controlling the adaptation factors of acoustic error signals for individual regions based on original noise sound pressure levels in different regions and the user requirement, and constructing the multi-region noise energy minimization control model with the adaptation factors, is specifically as follows:

$$\min \quad \lambda_1 \left\| \mathbf{e}_1\left(t\right) \right\|^2 + \lambda_2 \left\| \mathbf{e}_2\left(t\right) \right\|^2 + \cdots + \lambda_k \left\| \mathbf{e}_k\left(t\right) \right\|^2 + \cdots + \lambda_K \left\| \mathbf{e}_K\left(t\right) \right\|^2$$

wherein $\lambda_k$ is an adaptation factor of an acoustic error signal in a k-th region, $\lambda_k \geq 0$, $\lambda_k$ is adjusted and controlled based on an original noise sound pressure level in the $k$-th region and the user requirement, $e_k(t) = [e_{k1}(t)\ e_{k2}(t) \cdots e_{km}(t) \cdots e_{kM}(t)]$ is an acoustic error signal vector in the $k$-th region at time $t$, $e_{km}(t)$ is an $m$-th acoustic error signal in the $k$-th region at time $t$, there are $M$ acoustic error signals for each region, wherein k={1,2,..., K}, m={1,2,..., M}.

5. The noise control system with adjustable multi-region noise reduction performance according to claim 4, wherein the $\lambda_k$ is adjusted and controlled based on the original noise sound pressure level in the $k$-th region and the user requirement, is specifically as follows:

   when noise reduction is not required in the k-th region, setting $\lambda_k=0$;
   when the original noise sound pressure level in the $k$-th region is lower than an original noise sound pressure level in a further region, setting $0<\lambda_k< 1$;
   when the original noise sound pressure level in the $k$-th region is equal to the original noise sound pressure level in the further region, setting $\lambda_k=1$;
   when the original noise sound pressure level in the $k$-th region is higher than the original noise sound pressure level in the further region, setting $\lambda_k>1$.

6. The noise control system with adjustable multi-region noise reduction performance according to any one of claims 1 to 5, wherein the after receiving the reference signal, and the original noise signal or the acoustic error signal of each to-be-denoised region, the noise control unit calculating the excitation signal for the speaker array based on the multi-region noise energy minimization control model with the adaptation factors, is specifically as follows:

   calculating the excitation signal for the speaker array based on the reference signal and an initialized weight coefficient vector of the speaker array;
   after the excitation signal for the speaker array is input to the speaker array, the speaker array producing sound and superimposing the sound with the noise signals in the plurality of to-be-denoised regions, to form the acoustic error signals for each region in the plurality of to-be-denoised regions;
   calculating a filtered signal of the reference signal based on a time-domain estimated transfer function vector between the speaker array and the error microphone array in a corresponding region;
   updating, based on the filtered signal of the reference signal and the acoustic error signal for each region, a weight coefficient vector of the speaker array according to a principle of multi-region noise energy minimization;
   repeating the steps until a predetermined number of iterations or the multi-region noise energy minimization is reached, wherein when the steps are repeated, an updated weight coefficient of the speaker array is used to calculate the excitation signal for the speaker array.

7. The noise control system with adjustable multi-region noise reduction performance according to claim 6, wherein the calculating the excitation signal for the speaker array based on the reference signal and the initialized weight coefficient vector of the speaker array, is specifically as follows:

$$y_l\left(t\right) = \mathbf{W}_l^{\mathrm{T}}\left(t\right)\mathbf{X}\left(t\right)$$

wherein $y_l(t)$ is an excitation signal of an $l$-th speaker at time $t$, $\mathbf{W}_l(t)$ is a weight coefficient vector of the $l$-th speaker at time $i$, T represents transpose of a vector, $\mathbf{W}_l(t) = [w_{l0}(t)\ w_{l1}(t) \cdots w_{ln}(t) \cdots w_{lN-1}(t)]^{\mathrm{T}}$, $w_{ln}(t)$ is an $n$-th weight coefficient of the $l$-th speaker at time $t$, $N$ is an order of the weight coefficient vector of the speaker array, $\mathbf{X}(t) = [x(t)\ x(t-1) \ldots x(t-n+1) \ldots x(t-N+1)]^T$ is a reference signal vector, $x(t-n+1)$ is $n$ elements of the reference signal vector, 1={ 1,2,..., L}, L is a number of speakers, n={1,2,...,N}.

8. The noise control system with adjustable multi-region noise reduction performance according to claim 7, wherein the calculating the filtered signal of the reference signal based on the time-domain estimated transfer function vector between the speaker array and the error microphone array in the corresponding region, is specifically as follows:

$$\hat{x}_{lkm}(t) = \mathbf{X}(t) * \hat{\mathbf{h}}_{lkm} = \sum_{q=0}^{Q-1} \hat{h}_{lkmq}\, x(t-q)$$

wherein $\hat{x}_{lkm}(t)$ is the filtered signal of the reference signal at time $t$; $\hat{x}_{lkm}(t) = [\hat{x}_{lkm}(t)\, \hat{x}_{lkm}(t-1)\ldots \hat{x}_{lkm}(t-n+1)]\cdots \hat{x}_{lkm}(t-N+1)]^{T}$, $\hat{x}_{lkm}(t-n+1)$ is an $n$-th element in the filtered signal of the reference signal at time $t$, $*$ represents a convolution operation, $\hat{h}_{lkm} = [\hat{h}_{lkm1}\, \hat{h}_{lkm2}\cdots \hat{h}_{lkmq}\cdots \hat{h}_{lkmQ}]^{T}$ is the time-domain estimated transfer function vector from the $l$-th speaker to an m-th error microphone in a $k$-th region, $\hat{h}_{lkmq}$ is a $q$-th element in the time-domain estimated transfer function vector from the $l$-th speaker to the $m$-th error microphone in the k-th region, $q = \{0,1,\ldots,Q\text{-}1\}$, and $Q$ is an order of the time-domain estimated transfer function vector.

9. The noise control system with adjustable multi-region noise reduction performance according to claim 8, wherein the updating, based on the filtered signal of the reference signal and the acoustic error signal for each region, the weight coefficient vector of the speaker array according to the principle of multi-region noise energy minimization, is specifically as follows:

$$\mathbf{W}_{l}(t+1) = \mathbf{W}_{l}(t) - 2\mu \sum_{k=1}^{K} \lambda_{k}\left( \sum_{m=1}^{M} \hat{\mathbf{x}}_{lkm}(t)\, e_{km}(t) \right)$$

wherein $\mathbf{W}_{l}(t+1)$ is a weight coefficient vector of the speaker array at time $t+1$, and $\mu$ is a preset step factor.

10. A noise control method with adjustable multi-region noise reduction performance, comprising:

collecting, by a reference signal acquisition unit, a reference signal, and acquiring, by an error microphone array, an original noise signal or an acoustic error signal from a corresponding to-be-denoised region;

initializing a weight coefficient vector of a speaker array;

adjusting and controlling adaptation factors $\lambda_{k}$ of acoustic error signals for individual regions based on original noise sound pressure levels in different regions in a plurality of to-be-denoised regions and a user requirement, and constructing a multi-region noise energy minimization control model with the adaptation factors;

calculating an excitation signal for the speaker array based on the reference signal and the initialized weight coefficient vector of the speaker array;

after the excitation signal for the speaker array is input to the speaker array, producing sound and superimposing, by the speaker array, the sound with the noise signals in the plurality of to-be-denoised regions, to form an acoustic error signal for each region in the plurality of to-be-denoised regions;

calculating a filtered signal of the reference signal based on a time-domain estimated transfer function vector between the speaker array and the error microphone array in a corresponding region;

updating, based on the filtered signal of the reference signal and the acoustic error signal for each region, the weight coefficient vector of the speaker array according to a principle of multi-region noise energy minimization;

repeating the steps until a predetermined number of iterations or the multi-region noise energy minimization is reached, wherein when the steps are repeated, an updated weight coefficient of the speaker array is used to calculate the excitation signal for the speaker array.

11. The noise control method with adjustable multi-region noise reduction performance according to claim 10, wherein the adjusting and controlling the adaptation factors of acoustic error signals for individual regions based on the original noise sound pressure levels in different regions in the plurality of to-be-denoised regions and the user requirement, and constructing the multi-region noise energy minimization control model with the adaptation factors, is specifically as follows:

$$\min\ \lambda_{1}\left\| \mathbf{e}_{1}(t) \right\|^{2} + \lambda_{2}\left\| \mathbf{e}_{2}(t) \right\|^{2} + \cdots + \lambda_{k}\left\| \mathbf{e}_{k}(t) \right\|^{2} + \cdots + \lambda_{K}\left\| \mathbf{e}_{K}(t) \right\|^{2}$$

wherein $\lambda_{k}$ is an adaptation factor of an acoustic error signal in a $k$-th region, $\lambda_{k} \geq 0$, $\lambda_{k}$ is adjusted and controlled based on an original noise sound pressure level in the $k$-th region and the user requirement, $e_k(t) = [e_{k1}(t)\ e_{k2}(t) \cdots e_{km}(t) \cdots e_{kM}(t)]$ is an acoustic error signal vector in the $k$-th region at time $t$, $e_{km}(t)$ is an $m$-th acoustic error signal in the $k$-th region at time $t$, there are $M$ acoustic error signals for each region, wherein k={1,2,..., K}, m={1,2,..., M}.

12. The noise control method with adjustable multi-region noise reduction performance according to claim 11, wherein the adjustment and control of $\lambda_k$ based on the original noise sound pressure level in the $k$-th region and the user requirement, are specifically as follows:

  when noise reduction is not required in the $k$-th region, setting $\lambda_k=0$;
  when the original noise sound pressure level in the k-th region is lower than an original noise sound pressure level in a further region, setting $0<\lambda_k<1$;
  when the original noise sound pressure level in the $k$-th region is equal to the original noise sound pressure level in the further region, setting $\lambda_k=1$;
  when the original noise sound pressure level in the k-th region is higher than the original noise sound pressure level in the further region, setting $\lambda_k>1$.

13. The noise control method with adjustable multi-region noise reduction performance according to claim 10 or 11, wherein the calculating the excitation signal for the speaker array based on the reference signal and the initialized weight coefficient vector of the speaker array, is specifically as follows:

$$y_l\left(t\right) = \mathbf{W}_l^{\mathrm{T}}\left(t\right)\mathbf{X}\left(t\right)$$

wherein $y_l(t)$ is an excitation signal of an $l$-th speaker at time $t$, $\mathbf{W}_l(t)$ is a weight coefficient vector of the $l$-th speaker at time $t$, T represents transpose of a vector, $\mathbf{W}_l(t)=[w_{l0}(t)\ w_{l1}(t) \cdots w_{ln}(t) \cdots w_{lN-1}(t)]^{\mathrm{T}}$, $w_{ln}(t)$ is an $n$-th weight coefficient of the $l$-th speaker at time $t$, $N$ is an order of the weight coefficient vector of the speaker array, $\mathbf{X}(t) = [x(t)\ x(t-1) \ldots x(t-n+1) \ldots x(t-N+1)]^T$ is a reference signal vector, $x(t-n+1)$ is $n$ elements of the reference signal vector, 1={1,2,...,L}, L is a number of speakers, $n$={1,2,...,N},

14. The noise control method with adjustable multi-region noise reduction performance according to claim 13, wherein the calculating the filtered signal of the reference signal based on the time-domain estimated transfer function vector between the speaker array and the error microphone array in the corresponding region, is specifically as follows:

$$\hat{x}_{lkm}\left(t\right) = \mathbf{X}\left(t\right) * \hat{\mathbf{h}}_{lkm} = \sum_{q=0}^{Q-1} \hat{h}_{lkmq}\ x\left(t-q\right)$$

wherein $\hat{x}_{lkm}(t)$ is the filtered signal of the reference signal at time $t$; $\hat{\mathbf{x}}_{lkm}(t) = [\hat{x}_{lkm}(t)\ \hat{x}_{lkm}(t-1) \ldots \hat{x}_{lkm}(t-n+1)] \ldots \hat{x}_{lkm}(t-N+1)]^T$, $\hat{x}_{lkm}(t-n+1)$ is an $n$-th element in the filtered signal of the reference signal at time $t$, * represents a convolution operation, $\hat{\mathbf{h}}_{lkm} = [\hat{h}_{lkm1}\ \hat{h}_{lkm2} \cdots \hat{h}_{lkmq} \cdots \hat{h}_{lkmQ}]^T$ is the time-domain estimated transfer function vector from the $l$-th speaker to an $m$-th error microphone in a $k$-th region, $\hat{h}_{lkmq}$ is a $q$-th element in the time-domain estimated transfer function vector from the $l$-th speaker to the $m$-th error microphone in the k-th region, $q = \{0,1,...,Q-1\}$, and $Q$ is an order of the time-domain estimated transfer function vector.

15. The noise control method with adjustable multi-region noise reduction performance according to claim 14, wherein the updating, based on the filtered signal of the reference signal and the acoustic error signal for each region, the weight coefficient vector of the speaker array according to the principle of multi-region noise energy minimization, is specifically as follows:

$$\mathbf{W}_l\left(t+1\right) = \mathbf{W}_l\left(t\right) - 2\mu\sum_{k=1}^{K}\lambda_k\left(\sum_{m=1}^{M}\hat{\mathbf{x}}_{lkm}\left(t\right)e_{km}\left(t\right)\right)$$

wherein, $\mathbf{W}_l(t+1)$ is the weight coefficient vector of the speaker array at time $t+1$, and $\mu$ is a preset step factor.

16. A computer device, comprising a memory, a processor, and a computer program stored on the memory and executable on the processor, wherein the processor implements the method according to any one of claims 10 to 15 when executing the computer program.

17. A computer-readable storage medium, wherein a computer program is stored in the computer-readable storage medium, and when the computer program is run on a computer, the computer executes the method according to any one of claims 10 to 15.

18. A computer program product, comprising a computer program, wherein when a computer runs the computer program, the computer program executes the method according to any one of claims 10 to 15.

EP 4 712 070 A1

represents speaker

represents error
microphones

Noise reduction region 1  Noise reduction region *k*

Noise reduction region 2  Noise reduction region *K*

Original noise signal or
acoustic error signal

Reference
signal
acquisition unit

Reference signal

Noise control unit

Excitation signal for
speaker

FIG. 1

represents speaker

represents error
microphones

Power amplifier

Noise reduction region 1  Noise reduction region *k*

Power amplifier

Power amplifier

Noise reduction region 2  Noise reduction region *K*

Original noise signal or
acoustic error signal

Analog-to-digital
converter

Reference
signal
acquisition unit

Reference signal

Noise control unit

Excitation signal for
speaker

Digital-to-
analog converter

FIG. 2

A reference signal acquisition unit collects a reference signal, and an error microphone array acquires an original noise signal or an acoustic error signal from a corresponding to-be-denoised region

Initialize a weight coefficient vector of a speaker

Adjust and control adaptation factors of acoustic error signals for individual regions based on original noise sound pressure levels in different regions in a plurality of to-be-denoised regions and a user requirement, and construct a multi-region noise energy minimization control model with the adaptation factors

Calculate an excitation signal for the speaker array based on the reference signal and the initialized weight coefficient vector of the speaker

After the excitation signal for the speaker array is input to the speaker array, the speaker array produces sound and superimposes the sound with the noise signals in the plurality of to-be-denoised regions, to form an acoustic error signal for each region in the plurality of to-be-denoised regions

Calculate a filtered signal of the reference signal based on a time-domain estimated transfer function vector between the speaker array and the error microphone array in a corresponding region

Update, based on the filtered signal of the reference signal and the acoustic error signal for each region, the weight coefficient vector of the speaker according to a principle of multi-region noise energy minimization

Repeat the aforementioned steps until a predetermined number of iterations or the multi-region noise energy minimization is reached, when the aforementioned steps are repeated, an updated weight coefficient of the speaker array is used to calculate the excitation signal for the speaker array

FIG. 3

FIG. 4

FIG. 5

FIG. 6

## INTERNATIONAL SEARCH REPORT

| International application No. |
| --- |
| **PCT/CN2024/078856** |

| A. | CLASSIFICATION OF SUBJECT MATTER |
| --- | --- |

G10K 11/178(2006.01)i

According to International Patent Classification (IPC) or to both national classification and IPC

| B. | FIELDS SEARCHED |
| --- | --- |

Minimum documentation searched (classification system followed by classification symbols)

IPC: G10K

Documentation searched other than minimum documentation to the extent that such documents are included in the fields searched

Electronic data base consulted during the international search (name of data base and, where practicable, search terms used)

CNABS: CNTXT; CNKI; 万方, WANFANG; 超星, CHAOXING; VEN; USTXT; EPTXT; WOTXT; IEEE: 重庆长安, 噪声, 噪音, 降噪, 区域, 麦克风, 阵列, 用户, 客户, 乘客, 需求, 能量, 最小, noise, acoustic, multi, region, zone, area, microphone, array, user, requirement, energy, min

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116469365 A (CHONGQING CHANG'AN AUTOMOBILE CO., LTD.) 21 July 2023 (2023-07-21) description, paragraphs [0001]-[0157], and figures 1-6 | 1-18 |
| A | CN 107464552 A (XU YINHAI) 12 December 2017 (2017-12-12) description, paragraphs [0001]-[0087], and figures 1 and 2 | 1-18 |
| A | CN 106089361 A (CHONGQING CHANG'AN AUTOMOBILE CO., LTD.) 09 November 2016 (2016-11-09) entire document | 1-18 |
| A | CN 114582312 A (INSTITUTE OF ACOUSTICS, CHINESE ACADEMY OF SCIENCES) 03 June 2022 (2022-06-03) entire document | 1-18 |
| A | CN 115294953 A (ZHEJIANG UNIVERSITY) 04 November 2022 (2022-11-04) entire document | 1-18 |
| A | JP 2019070699 A (MAZDA MOTOR CORP.) 09 May 2019 (2019-05-09) entire document | 1-18 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 May 2024** | **18 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/078856** |

| Patent document cited in search report | | | Publication date (day/month/year) | Patent family member(s) | | Publication date (day/month/year) |
| --- | --- | --- | --- | --- | --- | --- |
| CN | 116469365 | A | 21 July 2023 | None | | |
| CN | 107464552 | A | 12 December 2017 | None | | |
| CN | 106089361 | A | 09 November 2016 | None | | |
| CN | 114582312 | A | 03 June 2022 | None | | |
| CN | 115294953 | A | 04 November 2022 | None | | |
| JP | 2019070699 | A | 09 May 2019 | JP 6586983 | B2 | 09 October 2019 |

Form PCT/ISA/210 (patent family annex) (July 2022)

**REFERENCES CITED IN THE DESCRIPTION**

**Patent documents cited in the description**

- CN 2023105268542